# EUROPÄISCHE PATENTSCHRIFT

(11) **EP 1 245 820 B1**
(45) Veröffentlichungstag und Bekanntmachung des Hinweises auf die Patenterteilung: **01.02.2006**
(21) Anmeldenummer: 01107497.8
(22) Anmeldetag: 29.03.2001
(51) Int. Cl.: F02M 25/07, F16K 1/24

(54) **Abgasrückführventil**
Exhaust gas recirculation valve
Soupape de recirculation de gaz d'échappement

(43) Veröffentlichungstag der Anmeldung: 02.10.2002
(73) Patentinhaber: Siebe Automotive (Deutschland) GmbH, 67346 Speyer (DE)
(72) Erfinder: Thiery, Christoph, 68549 Ilvesheim (DE); Klipfel, Bernhard, 76187 Karlsruhe (DE)
(74) Vertreter: HOFFMANN EITLE

(56) Entgegenhaltungen:
- EP-A- 0 887 541
- EP-A- 1 020 633
- DE-A- 2 918 348
- US-A- 4 171 689
- US-A- 4 222 356
- US-A- 5 148 678
- US-A- 5 531 205

## Beschreibung

### Technisches Gebiet

Die Erfindung betrifft ein Abgasrückführventil nach dem Oberbegriff des Anspruchs 1 sowie ein Abgasrückführsystem mit einem derartigen Abgasrückführventil.

Auf dem Gebiet der Verbrennungsmotoren ist es zur Verringerung von Schadstoffemissionen bekannt, einen Teil des von dem Motor abgegebenen Abgases in die Einlassleitung zurückzuführen. Für die Regelung des zurückgeführten Abgases in Abhängigkeit von dem Betriebszustand des Motors sind Abgasrückführventile erforderlich. Hierbei tritt das Problem auf, dass das Ventil einer Abgasrückführeinrichtung besonderen Anforderungen hinsichtlich der Dichtigkeit unterliegt und wenig anfällig für Leckage sein muss, um eine präzise Abregelung des zurückgeführten Abgasstromes zu ermöglichen.

### Stand der Technik

Ein Abgasrückführventil nach dem Oberbegriff des Anspruchs 1 ist aus der DE 22 41 935 A1 bekannt. Dieses Abgasrückführventil wird im Wesentlichen wie eine Drosselklappe drehend betätigt. Mit anderen Worten ist in einer Abgasrückführleitung mit weitgehend kreisrundem Querschnitt ein ebenfalls weitgehend kreisrundes Ventilelement vorgesehen, das durch eine Drehachse, an der das Ventilelement angebracht und über die es drehbar gelagert ist, betätigt wird. Hierbei berühren sich die dichtenden Teile, also ein Dichtkegel und die damit zusammenwirkende Dichtkante, lediglich im geschlossenen Zustand. Es tritt idealerweise kein Schleifen oder Reiben zwischen diesen Komponenten beim Öffnungs- und Schließvorgang auf. Im geschlossenen Zustand können somit lediglich diejenigen Abschnitte des Ventilelements, die sich außerhalb der für die Lagerung vorgesehen Drehachse befinden, zur Anlage an einen Ventilsitz gebracht werden.

Aus der US 4,222,356 ist ein Abgasrückführsystem bekannt, bei dem ein Klappenventil derart in einem Einlasskanal angeordnet ist, dass es in einem geschlossenen Zustand eine Abgasrückführleitung verschließt, die an der Einlassleitung derart angebracht ist, dass zurückgeführtes Abgas in die Einlassleitung zugeführt wird.

Die DE 29 18 348 A1 beschreibt ein Klappenventil mit einem Doppelsitz, das eine außerhalb der Dichtungsflächen zentrisch schwenkbar gelagerte Klappe aufweist.

Die EP 0 887 541 A2 offenbart ein Abgasrückführventil in Form eines Drehventils, das als Trommelventil beschrieben werden kann, bei dem eine zentrische Lagerung vorgesehen ist.

Die US 4, 171, 689. betrifft ein Abgasrückführventil, das außerhalb einer Abgasrückführleitung gelagert ist, und bei dem das Ventilelement auf einem Ende der Abgasrückführleitung zur Anlage gebracht werden kann.

Schließlich ist aus der JP 0059034471 ein Abgasrückführventil bekannt, bei dem ein Walzenkörper mit einem Durchgang vorgesehen ist, so dass durch Drehung des Walzenkörpers der Durchgang mit der Abgasrückführleitung verbunden werden kann, und Abgas zurückgeführt wird. Auch in diesem Fall erfolgt die Abdichtung im geschlossenen Zustand jedoch über Elemente, die beweglich sind, so dass eine hohe Gefahr von Leckage besteht.

### Darstellung der Erfindung

Der Erfindung liegt die Aufgabe zugrunde, ein Abgasrückführventil und ein zugehöriges Abgasrückführsystem zu schaffen, mit dem der zurückgeführte Abgasstrom zuverlässig und präzise geregelt werden kann, und das wenig anfällig für Leckage ist.

Die Lösung dieser Aufgabe erfolgt durch das im Anspruch 1 beschriebene Abgasrückführventil.

Demzufolge weist das erfindungsgemäße Abgasrückführventil, das in einer Abgasrückführleitung und nicht in der Einlassleitung des Motors angeordnet ist, ein Ventilelement auf, das um eine Achse quer zur Strömungsrichtung des Abgases auf einen Ventilsitz klapp-, dreh- oder schwenkbar ist. Erfindungsgemäß ist das Ventilelement jedoch im Gegensatz zu den bekannten Klappen- oder Drehventilen so gestaltet, dass es im geschlossenen Zustand vollständig auf einem Ventilsitz aufliegt. Mit anderen Worten wird der Ventilsitz über seinen gesamten Umfang ausschließlich durch das Ventilelement verschlossen, und es tragen dementsprechend keine Elemente, die bezüglich einander drehbar sind, zur Abdichtung bei. Dies gilt in gleicher Weise für jegliche Elemente, die bezüglich einander verschiebbar oder allgemein relativ beweglich sind, während sie einander berühren, wie dies beispielsweise bei Walzenschiebern der Fall ist. Mit anderen Worten erfolgt die Abdichtung erfindungsgemäß ausschließlich durch das Ventilelement in Zusammenwirkung mit dem Ventilsitz, wobei das Ventilelement im geöffneten Zustand vollständig von dem Ventilsitz gelöst ist, und im geschlossenen Zustand in eine an diesem anliegende Position gebracht wird.

Dies wird im Wesentlichen dadurch erreicht, dass die Drehlagerung des Ventilelements stromauf- oder stromabwärts von dem Ventilsitz angeordnet ist. Dementsprechend erstreckt sich das Ventilelement im geschlossenen Zustand von der Drehlagerung ein wenig entgegen oder mit der Strömungsrichtung des Abgases, so dass vor oder nach dem Bereich der Drehlagerung durch die Zusammenwirkung zwischen Ventilelement und Ventilsitz eine zuverlässige Abdichtung erreicht wird. Anders als bei den bekannten Dreh- oder Klappventilen sind die Drehwellen, die zur klappbaren Lagerung des Ventilelements vorgesehen sind, nicht an der Abdichtung des Abgasstromes beteiligt, sondern gewährleisten lediglich die klapp-, dreh- oder schwenkbare Beweglichkeit des Ventilelements.

Das Ventilelement selbst ist dementsprechend so gestaltet, dass es alleine für die Abdichtung an dem Ventilsitz sorgt, und es ist an den Lagerstellen nicht in irgendeiner Weise unterbrochen, was die Gefahr von Leckage mit sich bringen würde. Der Vorteil, dass keinesfalls Elemente, die bezüglich einander beweglich betätigt werden, für die Abdichtung sorgen müssen, besteht auch gegenüber den bekannten Abgasrückführventilen mit Walzenschiebern und gegenüber mittig gelagerten Klappen.

Vorteilhafte Weiterbildungen des erfindungsgemäßen Abgasrückführventils sind in den weiteren Ansprüchen beschrieben.

Wenngleich die erfindungsgemäßen Vorteile bei einer beliebigen Anordnung der Drehlagerung stromauf- oder stromabwärts des Ventilsitzes erreicht werden können, wird im Rahmen der Erfindung bevorzugt, dass die Lagerung des Ventilelements stromabwärts des Ventilsitzes angeordnet ist. Dies bietet bei dem erfindungsgemäßen Abgasrückführventil den Vorteil, dass sich die Lagerung in einem Bereich befindet, der nicht ständig mit Abgas gefüllt ist, so dass die Lagerung weniger umfangreich verschmutzt wird.

Wenngleich die Form des Ventilelements und damit die Querschnittsform der Abgasrückführleitung weitgehend beliebig gestaltet werden kann, wird für das Ventilelement ein weitgehend kreisförmiges Element bevorzugt, das mit einem Ventilsitz zusammenwirkt, der in einer Abgasrückführleitung vorgesehen ist, die weitgehend kreisförmig ist.

Für die Zusammenwirkung zwischen dem Ventilelement und dem Ventilsitz hat es sich als vorteilhaft erwiesen, wenn das Ventilelement mit einer gewissen Dicke ausgebildet ist und an seinem Rand entlang der Dicke abgeschrägt oder sphärisch gestaltet ist. Hierdurch kann das Dichtelement zum einen besonders zuverlässig mit einem weitgehend scharfkantigen Dichtsitz zusammenwirken, an den sich die schräge oder kugelige Randfläche des Dichtelements zuverlässig anlegt. Ferner wird durch eine derartige Gestaltung des Dichtelements die in jedem Motorbetriebspunkt notwendige Durchflussmenge an Abgas zur Verfügung gestellt und kann durch eine entsprechende Stellung des Ventilelements eingestellt werden. Schließlich wird die Strömung des zurückgeführten Abgases im geöffneten Zustand des Abgasrückführventils möglichst wenig beeinträchtigt. Ferner sei erwähnt, dass durch die Abschrägung oder Abrundung des Ventilelements in Kombination mit einer nachfolgend beschriebenen exzentrischen Lagerung des Ventilelements der Vorteil erhalten werden kann, dass das ventilelement zum Öffnungszeitpunkt an sämtlichen Stellen entlang seines Umfangs gleichzeitig öffnet. Mit anderen Worten wird das Ventilelement zu Beginn des Öffnungsvorgangs entlang seiner Schräge oder Abrundung derart von dem Ventilsitz weggedreht, dass es zunächst noch an sämtlichen Stellen entlang seines Umfangs an diesen anliegt. Zu einem bestimmten Zeitpunkt löst sich dann das gesamte Ventilelement von dem ventilsitz.

Für die Dichtigkeit des Ventilelements bei dem erfindungsgemäßen Abgasrückführventil bietet es erhebliche Vorteile, wenn das Ventilelement zumindest zweiteilig ausgebildet ist. Hierbei ist ein Teil des Ventilelements, das im geschlossenen Zustand auf dem Ventilsitz aufliegt, gegenüber dem Rest des ventilelements zumindest geringfügig beweglich vorgesehen. Hierdurch kann dieses Teil, das beispielsweise als beweglicher Dichtring gestaltet sein kann, hinsichtlich seiner Lage bezüglich des Ventilsitzes zumindest geringfügig ausgeglichen werden, so dass es stets dichtend auf dem Ventilsitz aufliegt, und auch Toleranzen ausgeglichen werden können. In dieser weise sind mit vergleichsweise geringem Aufwand deutlich reduzierte Leckagewerte realisierbar.

In diesem Fall wird bevorzugt, dass das bewegliche Teil des Ventilelements durch ein Federelement gehalten wird, so dass es zum einen in einer Richtung gegen ein Lösen gesichert ist und zum anderen in denjenigen Richtungen, in denen Ausgleichsbewegungen erfolgen sollen, beweglich ist.

Für die Drehlagerung des Ventilelements wird bevorzugt, dass diese in einer Richtung quer zur Drehachse bezüglich des Ventilelements exzentrisch vorgesehen ist. Mit anderen Worten ist die Drehlagerung unter der Annahme, dass das Klappen des Ventilelements um eine horizontale Achse erfolgt, ein wenig nach oben oder unten verschoben. Das bedeutet, dass das Ventilelement sich im geöffneten Zustand nicht in der Mitte der Abgasrückführleitung befindet, sondern am oberen oder unteren Rand derselben. Hierdurch wird die Beeinflussung der Strömung des zurückgeführten Abgases weiter vermindert.

In diesem Fall lassen sich besondere Vorteile dadurch erhalten, dass die Lagerung des Ventilelements stromaufwärts des Ventilelements vorgesehen ist. Durch die gewissermaßen doppelt vorhandene Exzentrizität, zum einen die Versetzung der Lagerung des Ventilelements in diesem Fall in stromaufwärtiger Richtung, und zum anderen die Exzentrizität der Lagerung bezüglich der Mittenachse der Abgasrückführleitung, lässt sich die Tatsache, dass auf der einen Seite der Lagerung eine größere Fläche mit Abgasdruck beaufschlagt wird als auf der anderen Seite, dazu nutzen, dass das Schließen des Ventilelements durch den Abgasdruck unterstützt wird, und somit eine Fail-Safe-Funktion realisiert wird.

Dies wird ferner durch das ebenfalls bevorzugte Merkmal unterstützt, wonach die Lagerung des Ventilelements an beiden Seiten getrennt voneinander vorgesehen ist. Mit anderen Worten erstreckt sich an dem Ventilelement keine durchgehende Drehwelle von der einen zu der anderen Seite der Abgasrückführleitung. Vielmehr ist das Ventilelement in geeigneter Weise an beiden Seiten getrennt gelagert. Dadurch, dass diese Lagerung getrennt ist, bzw. die Drehwelle geteilt ist, wird die Abgasströmung in äußerst geringem Umfang gestört.

Für den Betrieb eines Antriebs des erfindungsgemäßen Abgasrückführventils bietet es Vorteile, wenn der Antrieb von dem Ventilelement zumindest weitgehend thermisch entkoppelt ist. Mit anderen Worten sind bevorzugt Maßnahmen dafür vorgesehen, dass eine Wärmeleitung von dem Ventilelement zu dem Antrieb zumindest umfangreich behindert und somit reduziert wird, so dass sich der Antrieb nicht übermäßig erwärmen kann.

Dem gleichen Zweck dient die weitere bevorzugte Maßnahme, wonach zwischen dem Antrieb des erfindungsgemäßen Abgasrückführventils und der Abgasrückführleitung, in dem das Ventil angeordnet ist, zumindest ein Abschirmblech vorgesehen ist. Auch dieses verhindert wärmeleitung und -strahlung, die den Antrieb in unerwünschter Weise erwärmen würde.

Schließlich kann eine Erwärmung des Antriebs zusätzlich dadurch verhindert werden, dass, wie bevorzugt vorgesehen ist, der Antrieb lediglich an diskreten Stellen mit der Abgasrückführleitung verbunden ist.

Die Lösung der oben genannten Aufgabe erfolgt erfindungsgemäß ferner durch das im Anspruch 13 beschriebene Abgasrückführsystem, das zumindest ein Abgasrückführventil gemäß der Erfindung aufweist. Hierdurch können die erfindungsgemäßen Vorteile für ein Abgasrückführsystem insgesamt erhalten werden, wobei das Abgasrückführventil nicht notwendigerweise als getrenntes Bauteil vorgesehen sein muss, sondern beispielsweise durch eine geeignete Anordnung eines Ventilelements und dessen Lagerung in einem Abschnitt einer Abgasrückführleitung gebildet werden kann.

### Kurze Beschreibung der Zeichnungen

Nachfolgend wird die Erfindung rein beispielhaft anhand von in den Zeichnungen dargestellten Ausführungsformen näher erläutert. Es zeigen:
- Fig. 1: eine Explosionsdarstellung des erfindungsgemäßen Abgasrückführventils;
- Fig. 2: eine Explosionsansicht des erfindungsgemäßen Abgasrückführventils mit elektrischem Antrieb in einer zweiten Ausführungsform; und
- Fig. 3: eine Explosionsansicht einer Ausführungsform des Ventilelements mit reduzierter Ventilleckage für das erfindungsgemäße Abgasrückführventil.

### Äusführliche Beschreibung bevorzugter Ausführungsformen der Erfindung

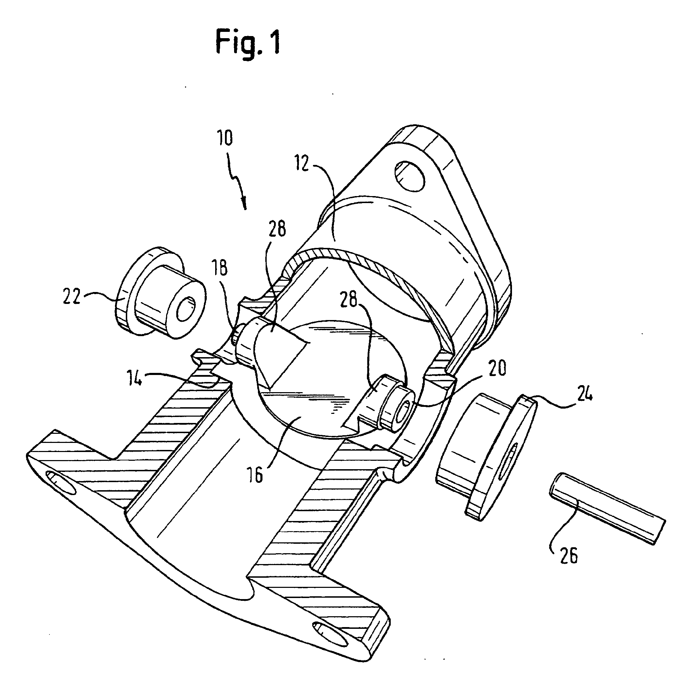

Fig. 1 zeigt in einer perspektivischen Explosionsansicht das erfindungsgemäße Abgasrückführventil 10, das in einem Abschnitt 12 einer Abgasrückführleitung angeordnet ist, der zu einer (nicht dargestellten) Einlassleitung eines Motors führt. Wie in Fig. 1 zu erkennen ist, wird der Ventilsitz 14, der die Dichtlinie definiert, durch einen Absatz gebildet. Das (in Fig. 1 offen dargestellte) Ventilelement 16 liegt im geschlossenen Zustand derart an dem Ventilsitz 14 an, dass die Abgasrückführleitung vollständig verschlossen wird. Das Ventilelement 16 gelangt aus dem gezeigten, offenen Zustand folgendermaßen in den geschlossenen Zustand. Von dem Ventilelement erstrecken sich an einer Stelle, die im geschlossenen Zustand des Ventilelements 16 bei dem gezeigten Beispiel stromabwärts liegt (die Strömung des Abgases kann bei der Darstellung der Fig. 1 von links nach rechts erfolgen) an beiden Seiten Lagerabschnitte 18, 20, die mit jeweiligen Lagerelementen 22, 24 zusammenwirken. Die Lagerelemente 22, 24 sind in geeignete Aussparungen in der Abgasrückführleitung eingesetzt, und die Lagerabschnitte 18, 20 erstrecken sich derart in die Lagerelemente 22, 24, dass das Ventilelement 16 um eine quer zur Strömungsrichtung verlaufende Achse klapp- oder drehbar ist. Die Betätigung erfolgt in dem gezeigten Fall durch eine Drehwelle 26, die mit einer (nicht gezeigten) elektrischen Betätigungseinrichtung verbunden ist.

Wie in Fig. 1 zu erkennen ist, befindet sich das Ventilelement 16, das an seinem umlaufenden Rand ununterbrochen ausgeführt ist, im geöffneten Zustand ein wenig unterhalb seiner Drehachse. Diese Anbindung wird bei dem gezeigten Ausführungsbeispiel durch sich von dem Ventilelement erstreckende Ansätze 28 erreicht, in denen die Lagerabschnitte 18, 20 vorgesehen sind. Diese Gestaltung bewirkt im Wesentlichen, dass durch das erfindungsgemäße Abgasrückführventil die Lagerung und die Dichtwirkung des Ventilelements 16 in vorteilhafter Weise voneinander getrennt werden können. Durch die gewissermaßen exzentrische Anbringung des Ventilelements 16 bezüglich seiner Drehachse wird das Ventilelement 16 bei dem gezeigten Beispiel beim Schließen insgesamt ein wenig entgegen der Strömungsrichtung bewegt und gelangt somit vollständig zur Anlage an den Ventilsitz 14.

Mit anderen Worten ist weder das Ventilelement 16 selbst noch der Ventilsitz 14 durch die Drehlagerung des Ventilelements 16 unterbrochen, was zu einer hohen Anfälligkeit für Leckage führen würde. Gewissermaßen sorgt alleine das Ventilelement 16 für die Abdichtung. Die Dichtlinie ist vor der Lagerung angeordnet, so dass an der Lagerung keine Leckageprobleme auftreten können. Ferner ist das Ventilelement 16, was in Fig. 1 nicht zu erkennen ist, mit einer gewissen Dicke versehen, und an seinem Rand ist es (gemäß Fig. 1 vom Betrachter weg) sich verjüngend, also zusammenlaufend abgeschrägt oder mit einem sphärischen Rand gestaltet. Hierdurch liegt es zuverlässig an dem vergleichsweise scharfkantigen Ventilsitz 14 an, der durch eine äußerst einfache Bearbeitung ausgebildet werden kann.

Wie in Fig. 1 ferner zu erkennen ist, ist die Lagerung des Ventilelements 16 (im geschlossenen Zustand gesehen) nicht nur in Richtung der Strömungsrichtung des Abgases exzentrisch, sondern auch in einer Richtung senkrecht hierzu. Mit anderen Worten befindet sich die Lagerung gemäß der dargestellten Ausführungsform (im offenen Zustand gesehen) bezüglich der Erstreckung des Ventilelements 16 in Strömungsrichtung nicht in der Mitte, sondern in diesem Fall ein wenig stromaufwärts, allgemein ausgedrückt in axialer Richtung der Abgasrückführleitung, versetzt. Hierdurch ist auch die Lagerung innerhalb der Abgasrückführleitung nach oben versetzt, so dass das Ventilelement 16 sich im geöffneten Zustand im unteren Bereich der Abgasrückführleitung befindet. Ebenso wäre denkbar, dass die Verhältnisse gerade umgekehrt sind, und sich das Ventilelement in einem oberen Bereich der Abgasrückführleitung befindet. Hierdurch wird eine möglichst geringe Störung der Strömung des zurückgeführten Abgases erreicht.

Dies wird ferner unterstützt dadurch, dass die Lagerung beider Seiten getrennt ausgeführt ist. Mit anderen Worten erstreckt sich zwischen den beiden Ansätzen 28 keine durchgehende Lagerwelle, sondern die beiden Lagerabschnitte 18, 20 sind getrennt voneinander vorgesehen. Dadurch, dass ein sich quer durch die Abgasrückführleitung erstreckendes Element vermieden wird, wird die Strömung des zurückgeführten Abgases in geringstmöglichem Umfang beeinträchtigt.

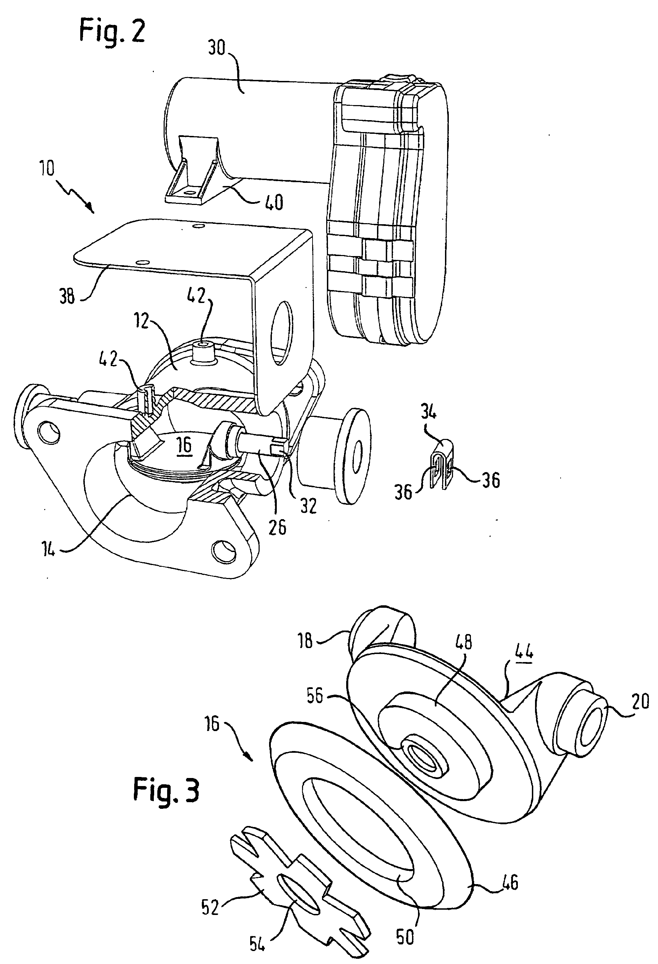

Die in Fig. 2 gezeigte Ausführungsform des erfindungsgemäßen Abgasrückführventils 10 ist gegenüber der in Fig. 1 gezeigten Ausführungsform um einen Antrieb 30 und verschiedene Maßnahmen zur thermischen Entkopplung des Antriebs 30 von dem Ventilelement 16 ergänzt. Bei dem gezeigten Ausführungsbeispiel handelt es sich bei dem Antrieb 30 um einen elektrischen Antrieb. Dieser kann jedoch auch in anderer Weise, beispielsweise als hydraulischer, pneumatischer oder mechanischer Antrieb ausgeführt sein. In grundsätzlich mit der Ausführungsform von Fig. 1 übereinstimmender Art und Weise ist das Ventilelement 16 an den beiden Seiten getrennt gelagert, wobei sich die Lagerung auch bei dieser Ausführungsform ein wenig stromabwärts, allgemein ausgedrückt in axialer Richtung der Abgasrückführleitung, bezüglich des Ventilsitzes 14 befindet. Der Antrieb des Ventilelements 16 erfolgt durch die auch bei der Ausführungsform von Fig. 1 vorhandene Drehwelle 26, die bei der Ausführungsform von Fig. 2 jedoch an ihrem äußeren Ende mit einem Vierkant 32 versehen ist. Selbstverständlich können andere Maßnahmen als die gezeigte Vierkantkontur vorgesehen sein, um eine Übertragung eines Drehmoments auf das Ventilelement 16 durch den Antrieb 30 zu ermöglichen. Bei der in Fig. 2 gezeigten Ausführungsform erfolgt diese Übertragung durch eine zwischen der Drehwelle 26 und einer Ausgangswelle des Antriebs 30 vorgesehene, im weitesten Sinne U-förmige Klammer 34, die in ihren beiden Schenkeln jeweils eine rechteckige oder quadratische Ausnehmung 36 aufweist, die mit der Drehwelle 26 bzw. der Ausgangswelle des Motors derart in Eingriff ist, dass eine Drehbewegung übertragen werden kann. Dadurch, dass die Drehwelle 26 über ein gesondertes Übertragungselement, insbesondere die vergleichsweise dünnwandige Klammer 34 mit dem Antrieb verbunden ist, kann an dieser Stelle nur in äußerst geringem Umfang Wärme von dem sich infolge des Abgasstromes erwärmenden Ventilelement 16 zu dem Antrieb 30 übertragen werden, und eine unerwünschte Erwärmung des Antriebs 30 kann in vorteilhafter Weise vermieden werden.

Dies wird bei der Ausführungsform von Fig. 2 unterstützt durch ein Abschirmblech 38, das weitgehend L-förmig gestaltet sein kann und den Antrieb 30 von der Abgasrückführleitung 12 gegen wärmestrahlung abschirmt, in dem sich das Abgasrückführventil befindet, das durch den Antrieb 30 anzutreiben ist. Insbesondere erstreckt sich ein in Fig. 2 weitgehend horizontal ausgerichteter Schenkel des Abschirmblechs 38 derart parallel zu dem zylinderförmigen Motorabschnitt des Antriebs 30, dass hier keine unerwünschte Wärmeleitung oder Strahlung auf den Motor einwirken kann. Der sich weitgehend vertikal erstreckende Abschnitt des Abschirmblechs 38 schirmt eine daran angrenzende Getriebeeinheit des Antriebs 30 von der warmen Abgasrückführleitung ab.

Schließlich erfolgt eine vorteilhafte thermische Entkopplung des Antriebs 30 dadurch, dass dieser lediglich an diskreten Stellen mit der Abgasrückführleitung verbunden ist. Dies erfolgt bei der gezeigten Ausführungsform durch einen geeigneten Fuß 40. Durch diese Anbindung sowie durch die in dem Abschirmblech 38 zu erkennenden Öffnungen kann der Antrieb 30 mittels geeigneter Verbindungselemente an Ansätzen 42 an der Abgasrückführleitung befestigt werden. Es sei angemerkt, dass ähnliche Befestigungsansätze 42 und ein entsprechender Fuß 40 auch an dem sich weitgehend vertikal erstreckenden Getriebeabschnitt des Antriebs 30 vorgesehen sein können, um auch in einem um 90° seitlich versetzten Bereich eine Befestigung des Antriebs 30 an wenigen diskreten Stellen zu gewährleisten. Zur weiteren Reduzierung der Wärmeübertragung auf den Antrieb 30 können an den Befestigungspunkten Isolationselemente, beispielsweise aus Glimmer, oder keramische Isolationselemente, eingesetzt werden. Hierdurch wird in jedem Fall der Umfang der Wärmeübertragung auf den Antrieb 30 in vorteilhafter Weise reduziert.

In Fig. 3 ist ein bevorzugter Aufbau des Ventilelements 16 dargestellt. Dieses besteht in vorteilhafter Weise aus einem Grundkörper 44, an dem die auch in Fig. 1 zu erkennenden Lagerabschnitte 18, 20 ausgebildet sind. An einer Seite des Grundkörpers 44 ist als Aufnahme für den eigentlichen Dichtring 46, der im geschlossenen Zustand des Ventils auf dem Ventilsitz 14 aufliegt, im Wesentlichen ein vorstehender Ring oder eine vorstehende Scheibe 48 vorgesehen. Es sei angemerkt, dass der Ring oder die Scheibe 48 einen etwas geringeren Durchmesser aufweisen als die kreisförmige Ausnehmung 50 in dem Dichtring 46, so dass der Dichtring 46 zumindest geringfügig in seitlicher oder radialer Richtung bezüglich des Grundkörpers 44 beweglich ist. Dies bedeutet, dass sich der Dichtring 46, sobald er zur Anlage an dem Ventilsitz 14 kommt, zumindest geringfügig ausrichten kann, und möglicherweise vorhandene Toleranzen derart ausgeglichen werden können, dass sich der Dichtring 46 derart verschiebt, dass er an sämtlichen Stellen entlang seines Umfangs zuverlässig dichtend auf dem Ventilsitz 14 aufliegt und somit eine toleranzbedingte Sitzleckage minimiert.

Gegen ein Lösen des Dichtrings 46 von dem Grundkörper 44 ist ein sternförmiges Federelement 52 vorgesehen. Dieses sternförmige Federelement 52, das selbstverständlich auch unterschiedlich gestaltet sein kann, ist mit seiner inneren kreisförmigen Ausnehmung 54 fest auf einen weiteren ring-oder scheibenförmigen Vorsprung 56 gefügt, der an dem ring-oder scheibenförmigen Vorsprung 48 des Grundkörpers 44 vorgesehen ist. In dieser Weise wird der Dichtring 46 derart an dem Grundkörper 44 gehalten, dass er sich in radialen Richtungen bewegen kann, um Toleranzen auszugleichen, jedoch sich in axialer Richtung nicht von diesem lösen kann.

## Patentansprüche

1. Abgasrückführventil (10), das in einer Abgasrückführleitung (12) angeordnet ist und ein Ventilelement (16) aufweist, das auf einen Ventilsitz (14) um eine Achse quer zur Strömungsrichtung auf einen Ventilsitz (14) klapp-, dreh- oder schwenkbar ist,
**dadurch gekennzeichnet, dass**
der Ventilsitz (14) im geschlossenen Zustand um seinen gesamten Umfang von dem Ventilelement (16) verschlossen wird, und dass eine Lagerung (18, 20, 22, 24) des Ventilelements (16) in einer Richtung quer zur Drehachse derart exzentrisch bezüglich des Ventilelements (16) und exzentrisch bezüglich der Mittenachse der Abgasrückführleitung (12) vorgesehen ist, dass sich das Ventilelement im geöffneten Zustand an einem Rand, bei horizontaler Ausrichtung der Abgasrückführleitung (12) an einem oberen oder unteren Rand derselben, befindet.

2. Abgasrückführventil nach Anspruch 1,
**dadurch gekennzeichnet, dass**
die Lagerung (18, 20, 22, 24) des Ventilelements (16) stromabwärts des Ventilsitzes (14) angeordnet ist.

3. Abgasrückführventil nach Anspruch 1 oder 2,
**dadurch gekennzeichnet, dass**
das Ventilelement (16) weitgehend kreisförmig ausgebildet ist.

4. Abgasrückführventil nach zumindest einem der vorangehenden Ansprüche,
**dadurch gekennzeichnet, dass**
das Ventilelement (16) an seinem Rand entlang seiner Dicke abgeschrägt oder sphärisch gestaltet ist.

5. Abgasrückführventil nach zumindest einem der vorangehenden Ansprüche,
**dadurch gekennzeichnet, dass**
das Ventilelement (16) zumindest zweiteilig ausgebildet ist, wobei ein auf dem Ventilsitz (14) im geschlossenen Zustand aufliegendes Teil (46) zumindest geringfügig beweglich vorgesehen ist.

6. Abgasrückführventil nach Anspruch 5,
**dadurch gekennzeichnet, dass**
das bewegliche Teil (46) durch ein Federelement (52) gehalten wird.

7. Abgasrückführventil nach Anspruch 6,
**dadurch gekennzeichnet, dass**
die Lagerung (18, 20, 22, 24) des Ventilelements (16) stromaufwärts des Ventilsitzes (14) angeordnet ist.

8. Abgasrückführventil nach zumindest einem der vorangehenden Ansprüche,
**dadurch gekennzeichnet, dass**
die Lagerung (18, 20, 22, 24) des Ventilelements (16) an beiden Seiten getrennt voneinander vorgesehen ist.

9. Abgasrückführventil nach zumindest einem der vorangehenden Ansprüche,
**dadurch gekennzeichnet, dass**
dieses einen insbesondere elektrischen Antrieb (30) aufweist, der von dem Ventilelement (16) zumindest weitgehend thermisch entkoppelt ist.

10. Abgasrückführventil nach Anspruch 9,
**dadurch gekennzeichnet, dass**
zwischen dem Antrieb (30) und der Abgasrückführleitung (12) zumindest ein Abschirmblech (38) vorgesehen ist.

11. Abgasrückführventil nach Anspruch 9 oder 10,
**dadurch gekennzeichnet, dass**
der Antrieb (30) lediglich an diskreten Stellen mit der Abgasrückführleitung (12) verbunden ist.

12. Abgasrückführsystem mit zumindest einem
Abgasrückführventil nach zumindest einem der vorangehenden Ansprüche.

## Claims

1. Exhaust gas recirculation valve (10) which is arranged in an exhaust gas recirculation pipe (12) and comprises a valve element (16) which is foldable, rotatable or pivotable onto a valve seat (14) about an axis transversely to the direction of flow onto a valve seat (14), **characterised in that** in the closed state the valve seat (14) is closed round its whole circumference by the valve element (16), and **in that** a mounting (18, 20, 22, 24) of the valve element (16) is provided in a direction transversely to the axis of rotation, so eccentrically relative to the valve element (16) and eccentrically relative to the centre axis of the exhaust gas recirculation pipe (12) that in the open state the valve element is located at an edge, with horizontal orientation of the exhaust gas recirculation pipe (12) on an upper or lower edge thereof.

2. Exhaust gas recirculation valve according to claim 1, **characterised in that** the mounting (18, 20, 22, 24) of the valve element (16) is arranged downstream of the valve seat (14).

3. Exhaust gas recirculation valve according to claim 1 or 2, **characterised in that** the valve element (16) is of largely circular construction.

4. Exhaust gas recirculation valve according to one of more of the preceding claims, **characterised in that** the valve element (16) is bevelled or spherically shaped at its edge along its thickness.

5. Exhaust gas recirculation valve according to one of more of the preceding claims, **characterised in that** the valve element (16) is constructed in at least two parts, wherein one part (46) resting on the valve seat (14) in the closed state is provided at least slightly movably.

6. Exhaust gas recirculation valve according to claim 5, **characterised in that** the movable part (46) is held by a spring element (52).

7. Exhaust gas recirculation valve according to claim 6, **characterised in that** the mounting (18, 20, 22, 24) of the valve element (16) is arranged upstream of the valve seat (14).

8. Exhaust gas recirculation valve according to one of more of the preceding claims, **characterised in that** the mounting (18, 20, 22, 24) of the valve element (16) is provided on both sides separately from each other.

9. Exhaust gas recirculation valve according to one of more of the preceding claims, **characterised in that** it has in particular an electrical drive (30) which is at least to a large extent thermally uncoupled from the valve element (16).

10. Exhaust gas recirculation valve according to claim 9, **characterised in that** between the drive (30) and the exhaust gas recirculation pipe (12) is provided at least one shield plate (38).

11. Exhaust gas recirculation valve according to claim 9 or 10, **characterised in that** the drive (30) is connected to the exhaust gas recirculation pipe (12) only at discrete points.

12. Exhaust gas recirculation system with at least one exhaust gas recirculation valve according to one of more of the preceding claims.

## Revendications

1. Soupape de recirculation des gaz d'échappement (10), disposée dans une conduite de recirculation des gaz d'échappement (12) et présentant un élément de soupape (16), susceptible de basculer, de tourner ou de pivoter sur un siège de soupape (14) autour d'un axe, transversalement à la direction d'écoulement, sur un siège de soupape (14), **caractérisée en ce que** le siège de soupape (14), à l'état fermé, est fermé sur la totalité de sa périphérie par l'élément de soupape (16), et **en ce qu'**un montage en palier (18,20,22,24) de l'élément de soupape (16), dans une direction transversale par rapport à l'axe de rotation, est prévu de façon excentrique par rapport à l'élément de soupape (16) et excentrique par rapport à l'axe médian de la conduite de recirculation de gaz d'échappement (12), de manière que l'élément de soupape, à l'état ouvert, se trouve sur un bord, sachant que, lorsque la conduite de recirculation des gaz d'échappement (12) est orientée horizontalement, il se trouve sur un bord supérieur ou sur un bord inférieur de celle-ci.

2. Soupape de recirculation des gaz d'échappement selon la revendication 1, **caractérisée en ce que** le montage en palier (18,20,22,24) de l'élément de soupape (16) est disposé en aval du siège de soupape (14) dans l'écoulement.

3. Soupape de recirculation des gaz d'échappement selon la revendication 1 ou 2, **caractérisée en ce que** l'élément de soupape (16) est de configuration notablement circulaire.

4. Soupape de recirculation des gaz d'échappement selon au moins l'une des revendications précédentes, **caractérisée en ce que** l'élément de soupape (16), sur son bord, est chanfreiné ou sphérique le long de son épaisseur.

5. Soupape de recirculation des gaz d'échappement selon au moins l'une des revendications précédentes, **caractérisée en ce que** l'élément de soupape (16) est configuré au moins en deux parties, sachant qu'une partie (46), reposant sur le siège de soupape (14) à l'état fermé, est prévue de façon au moins légèrement mobile.

6. Soupape de recirculation des gaz d'échappement selon la revendication 5, **caractérisée en ce que** la partie (46) mobile est maintenue par un élément élastique (52).

7. Soupape de recirculation des gaz d'échappement selon la revendication 6, **caractérisée en ce que** le montage en palier (18,20,22,24) de l'élément de soupape (16) est disposé en amont du siège de soupape (16) dans l'écoulement.

8. Soupape de recirculation des gaz d'échappement selon au moins l'une des revendications précédentes, **caractérisée en ce que** le montage en palier (18,20,22,24) de l'élément de soupape (16) est prévu en deux côtés, séparément l'un de l'autre.

9. Soupape de recirculation des gaz d'échappement selon au moins l'une des revendications précédentes, **caractérisée en ce que** celui-ci présente un dispositif d'entraînement (30), en particulier électrique, au moins largement désaccouplé thermiquement de l'élément de soupape (16).

10. Soupape de recirculation des gaz d'échappement selon la revendication 9, **caractérisé en ce que**, entre le dispositif d'entraînement (30) et la conduite de recirculation des gaz d'échappement (12), est prévue au moins une tôle d'écrantage (38).

11. Soupape de recirculation des gaz d'échappement selon la revendication 9 ou 10, **caractérisée en ce que** le dispositif d'entraînement (30) est relié à la conduite de recirculation des gaz d'échappement (12), uniquement en des emplacements discrets.

12. Système de recirculation des gaz d'échappement, comprenant au moins une soupape de recirculation des gaz d'échappement selon au moins l'une des revendications précédentes.
